# EUROPEAN PATENT APPLICATION

(11) **EP 1 792 724 A2**
(43) Date of publication of application: **06.06.2007**
(21) Application number: 06398015.5
(22) Date of filing: 29.09.2006
(51) Int. Cl.: B32B 5/26, A47G 9/02

(54) **Cover manufacturing process**

(30) Priority: 30.09.2005 PT 10336105
(71) Applicant: Sasaki Internacional- Industria e Comércio de Colchöes, Lda., Santo Rirso, 4825 Agrela STS (PT)
(72) Inventor: Sasaki, Susumo, 4825-010 Agrela STS (PT)
(74) Representative: Costa Franca, Vitor Hugo

(57) **Abstract**

The present patent refers to a cover (1) consisting in the cover tissue (3) whose filler is made of a polyester blanket (2) impregnated in both sided by a fixating product containing tourmaline powder (4) or other long infrared reflecting material.

## Description

The object of the present invention is the manufacturing process of a cover, whose filling material is achieved by means of a polyester blanket in which both sides are impregnated with a fixation product containing tourmaline powder.

Several types of covers are known in the market, most of then using polyester blanket as a filler and thermal insulating material.

The novelty of the present patent relies in the impregnation of both sides of the polyester blanket with a fixation product containing tourmaline powder.

Tourmaline generates static electricity and presents, in its inside, aligned positive and negative charges. This feature results in several beneficial effects for human body, when, according to the present patent, it is enveloped by this mineral powder.

Tourmaline reflects the long infrared (4-14µ) emitted by the human body. This radiation is responsible for the body ionic balance, that is: it causes the body and nerves to relax; activates cells; rules the pH of the blood and activates the digestive system.

The impregnation of the sides of the polyester blanket is achieved by means of a fixating product containing 100 to 200 grams of tourmaline powder per liter of fixating product, up to 5 to 10 mm deep.

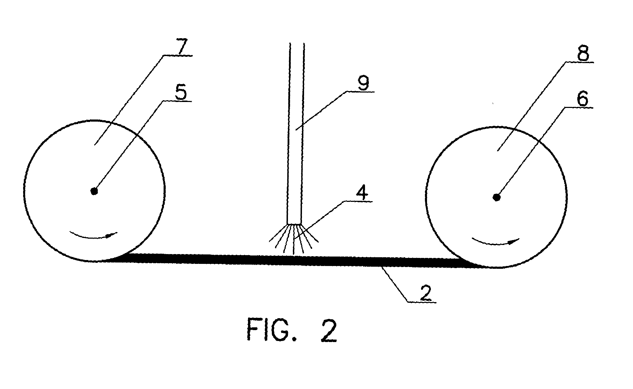

The impregnation is achieved by means of an apparatus known in the technique/art, described here below in reference to Figure 2.

The following Figures show :
- **Figure 1 -**: a schematic side view of the cover, according to the patent,
- **Figure 2 -**: a schematic view of the polyester blanket impregnation apparatus, according to the patent.

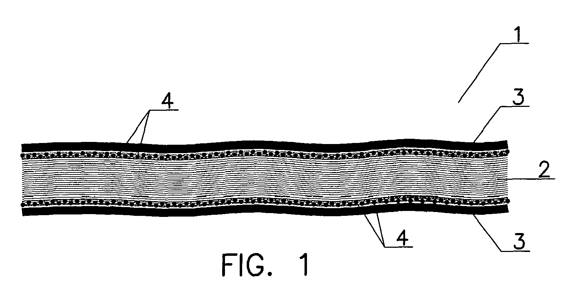

Figure 1 shows the cover (1) consisting of the cover tissue (3) and of a polyester blanket filling (2) impregnated by a fixation product containing tourmaline powder (4).

Figure 2 schematically shows the impregnation apparatus consisting of two shafts (5 and 6) that sustain two reels (7 and 8) and a pulverization arm (9).

The polyester blanket filling (2) is unwrapped by the reel (7) suspended in the shaft (5), passes through a zone where it is pulverized by the pulverization arm (9). This arm moves perpendicularly to the figure plan in an came and go movement along the blanket, producing a jet of fixating product containing tourmaline powder (4). The blanket is wrapped in the reel (8) suspended in the shaft (6).

The tuning of the sliding speed of the blanket, of the side movement speed of the arm (9) and of the fixating product jet pressure containing tourmaline powder, allow the adjustment of the depth of the impregnation of the blanket(2) by the fixating product.

After the impregnation of one side of the blanket, the reels are switched and the impregnation of the other side is achieved with the help of an additional shaft, not showed in the figure.

## Claims

1. **^{a}** - A cover manufacturing process (1), consisting of a polyester blanket (2), covered in both sides by a cover tissue (3), the tissues of both sides being woven one to another and closed with bias tape, **characterized by** the fact that both sides of the polyester blanket are impregnated by a fixating product containing tourmaline powder (4) or ceramic long infrared reflecting powder.

2. **^{a} -** Cover manufacturing process (1), according to claim 1, **characterized by** the fact that polyester blankets used have densities of 150 to 500 gr/m².

3. **^{a} -** Cover manufacturing process (1), according to claim 2, **characterized by** the fact that the impregnation of the sides of the blanket (2) by tourmaline or by long infrared reflecting material blended with a fixating product is obtained by means of pulverization, **by** the fixating product being composed of 45 % lacquer diluted in 55 % of solvent, **and by** the fact that the fixating product contains tourmaline powder in the ratio of 1 liter of fixating product to 100 to 200g of tourmaline powder.

4. **^{a}** - Cover manufacturing process (1), according to claim 3, **characterized by** the fact that the pulverization is made in a way that both sides of the polyester blanket are covered by a film of the mixture diluted fixator/tourmaline powder of 5 to 10 mm thick.
